# EUROPEAN PATENT APPLICATION

(11) **EP 4 403 850 A1**
(43) Date of publication of application: **24.07.2024**
(21) Application number: 22870043.1
(22) Date of filing: 15.09.2022
(51) Int. Cl.: F25B 15/00, F25B 43/04

(54) **ABSORBER UNIT, HEAT EXCHANGE UNIT, AND ABSORPTION-TYPE REFRIGERATOR**

(30) Priority: 16.09.2021 JP 2021150932
(71) Applicant: Panasonic Intellectual Property Management Co., Ltd., Kadoma-shi, Osaka 571-0057 (JP)
(72) Inventor: KAWANO, Bunki, Kadoma-shi, Osaka 571-0057 (JP); SHIMODAHIRA, Nobukazu, Kadoma-shi, Osaka 571-0057 (JP)
(74) Representative: Eisenführ Speiser
(86) International application number: PCT/JP2022/034654
(87) International publication number: WO 2023/042896

(57) **Abstract**

An absorber unit 1 includes a first container 11a, a first heat transfer tube group 12a, a first supplier 13a, a second container 11b, a second heat transfer tube group 12b, a second supplier 13b, a reservoir 14, and a pump 15. The reservoir 14 stores a third solution, inside the second container 11b. The absorber unit 1 includes an ejector 16, a first extraction path 17a, and a second extraction path 17b. The ejector 16 extracts first gas that contains noncondensing gas from the first container 11a by using the third solution as a driving flow. The first extraction path 17a is connected to the first container 11a and the ejector 16. The second extraction path 17b guides second gas that contains noncondensing gas present inside the second container 11b, to the inside of the first container 11a.

## Description

### TECHNICAL FIELD

The present disclosure relates to an absorber unit, a heat exchange unit, and an absorption-type refrigerator.

### BACKGROUND ART

Patent Literature 1 describes an absorption-type refrigerating device that includes in-vessel gas extraction means. This absorption-type refrigerating device includes a generator, a condenser, an evaporator, an absorber, a solution pump, in-vessel gas extraction means, hydrogen gas treatment means, and refrigerant solution supply means. The generator heats a dilute refrigerant solution in which a refrigerant and an absorbent are dissolved, to separate the dilute refrigerant solution into a concentrated refrigerant solution and refrigerant vapor. The condenser cools the refrigerant vapor from the generator to be condensed. The absorber allows the refrigerant vapor to be absorbed by the concentrated refrigerant solution. The solution pump pumps a dilute refrigerant solution having the refrigerant vapor absorbed therein from the absorber to the generator. The in-vessel gas extraction means extracts in-vessel gas from the absorber by using an ejector that uses, as a driving fluid, the dilute refrigerant solution pumped by the solution pump. The hydrogen gas treatment means separates, from the refrigerant solution, in a gas-liquid separation part, the in-vessel gas extracted by the in-vessel gas extraction means, and oxidizes hydrogen gas in the separated in-vessel gas, in an oxidation reaction part. Accordingly, pressure increase in the device due to generation of hydrogen gas is prevented, and decrease in the capacity of the absorption-type refrigerating device is prevented.

### CITATION LIST

### Patent Literature

Patent Literature 1: JP 2008-261569A

### SUMMARY OF INVENTION

### Technical Problem

The present disclosure provides an absorber unit that, when a vapor-phase refrigerant is allowed to be absorbed by a solution in a plurality of stages, is advantageous from the viewpoint of efficiently extracting gas that contains noncondensing gas, in each stage.

### Solution to Problem

An absorber unit in the present disclosure includes:
a first container;
a first heat transfer tube group disposed inside the first container and having a flow path for cooling water thereinside;
a first supplier configured to supply a first solution toward the first heat transfer tube group;
a second container;
a second heat transfer tube group disposed inside the second container and having a flow path for the cooling water thereinside;
a second supplier configured to supply a second solution toward the second heat transfer tube group;
a reservoir configured to store, inside the second container, a third solution that is generated as a result of the second solution absorbing a vapor-phase refrigerant and that has a solute concentration lower than a solute concentration of the second solution;
a pump configured to pump the third solution stored in the reservoir;
an ejector configured to extract first gas that contains noncondensing gas from the first container, by using as a driving flow the third solution pumped by the pump;
a first extraction path connected to the first container and the ejector and configured to guide the first gas to the ejector; and
a second extraction path connected to the first container and the second container and configured to guide second gas that contains noncondensing gas present inside the second container, to an inside of the first container.

### Advantageous Effects of Invention

According to the absorber unit in the present disclosure, the second gas that contains noncondensing gas present inside the second container is guided to the inside of the first container through the second extraction path, and the first gas that contains noncondensing gas is guided from the first container to the ejector through the first extraction path. Therefore, the gas that contains noncondensing gas present inside the first container and the second container can be efficiently extracted.

### BRIEF DESCRIPTION OF THE DRAWINGS

FIG. 1 is a schematic diagram of a heat exchange unit in Embodiment 1.
FIG. 2 is a schematic diagram of an ejector in Embodiment 1.
FIG. 3 is a diagram showing an example of the heat exchange unit in Embodiment 1.
FIG. 4 is a schematic diagram of a heat exchange unit in Embodiment 2.
FIG. 5 is a schematic diagram of the heat exchange unit in Embodiment 2.
FIG. 6 is a schematic diagram of an absorption-type refrigerator in Embodiment 3.

### DESCRIPTION OF EMBODIMENTS

### (Findings on which the present disclosure is based, and the like)

At the time when the inventors conceived of the present disclosure, in an absorption-type refrigerator in which a solution such as a solution of a halogenated salt was used as an absorbent liquid, the solution and iron contained in a member forming an apparatus underwent chemical reaction, thereby generating noncondensing gas such as hydrogen gas. Therefore, in the industry, in order to solve a problem that the heat transfer performance of an absorber significantly decreases in association with generation of noncondensing gas, which results in decreased refrigeration capacity, it was common practice to adopt a design in which gas that contained noncondensing gas was extracted by using a vacuum pump and an extraction ejector. In particular, from the viewpoint of manufacturing cost and reliability, it was common practice to extract gas that contained noncondensing gas, by using an extraction ejector which could be produced inexpensively and which did not have a movable part. In such a situation, the inventors found a problem that, when a vapor-phase refrigerant is allowed to be absorbed by a solution in a plurality of stages in an absorption-type refrigerator, it is difficult to efficiently extract gas that contains noncondensing gas in each stage. For example, when gas that contains noncondensing gas in each stage is simultaneously extracted by using an ejector, noncondensing gas in a low pressure stage cannot be extracted. This is because the pressure inside the ejector becomes an intermediate pressure between the pressure in a low pressure stage and a pressure in a high pressure stage. Therefore, it is difficult to efficiently extract gas that contains noncondensing gas in each stage. The present inventors configured the subject matters of the present disclosure in order to solve the problem.

The present disclosure provides an absorber unit that, when a vapor-phase refrigerant is allowed to be absorbed by a solution in a plurality of stages, is advantageous from the viewpoint of efficiently extracting gas that contains noncondensing gas in each stage.

Embodiments will be described in detail below with reference to the drawings. However, an unnecessarily detailed description may be omitted. For example, a detailed description of the matters already well known and a repeated description of substantially the same configuration may be omitted. This is for the purpose of preventing the following description from being unnecessarily redundant, and allowing those skilled in the art to easily understand the present disclosure. Note that the accompanying drawings and the following description are provided for those skilled in the art to fully understand the present disclosure, and thus are not intended to limit the subject matters recited in the claims to these.

### (Embodiment 1)

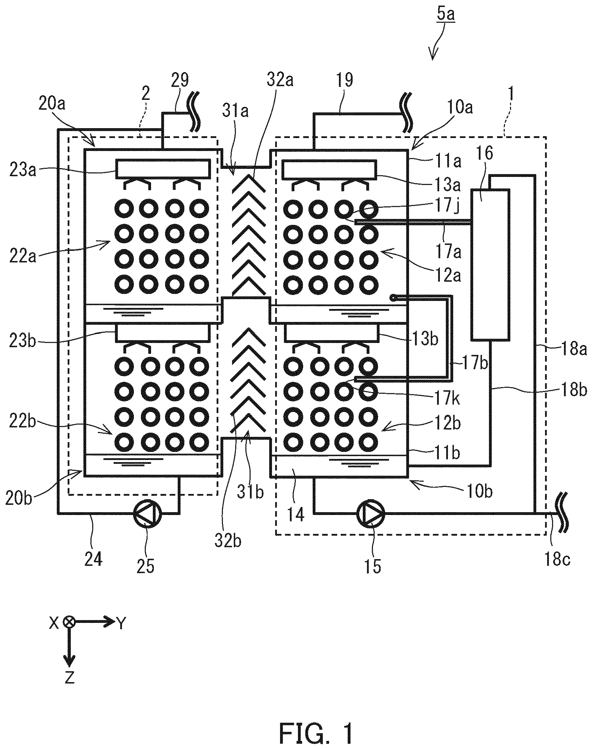

Embodiment 1 will be described below with reference to FIG. 1, FIG. 2, and FIG. 3. In the accompanying drawings, the Z-axis positive direction represents the gravity direction. The X-axis, the Y-axis, and the Z-axis are orthogonal to each other.

### [1-1. Configuration]

FIG. 1 is a schematic diagram of a heat exchange unit 5a in Embodiment 1. In FIG. 1, the heat exchange unit 5a includes an absorber unit 1, an evaporator unit 2, a first vapor flow path 31a, and a second vapor flow path 31b. The evaporator unit 2 generates a vapor-phase refrigerant. The absorber unit 1 absorbs the vapor-phase refrigerant generated by the evaporator unit 2. The first vapor flow path 31a and the second vapor flow path 31b guide the vapor-phase refrigerant generated by the evaporator unit 2, to the absorber unit 1.

The absorber unit 1 includes a first absorber 10a and a second absorber 10b. The first absorber 10a includes a first container 11a, a first heat transfer tube group 12a, and a first supplier 13a. The second absorber 10b includes a second container 11b, a second heat transfer tube group 12b, and a second supplier 13b. In the gravity direction, the first absorber 10a is disposed in an upper stage, and the second absorber 10b is disposed in a lower stage. The first heat transfer tube group 12a is disposed inside the first container 11a. The first heat transfer tube group 12a has a flow path for cooling water thereinside. The second heat transfer tube group 12b is disposed inside the second container 11b. The second heat transfer tube group 12b has a flow path for the cooling water thereinside. Each of the first heat transfer tube group 12a and the second heat transfer tube group 12b includes a plurality of heat transfer tubes arranged in rows and columns, for example.

The first supplier 13a supplies a first solution toward the first heat transfer tube group 12a. The first supplier 13a includes, for example, a tray storing the first solution, and drips the first solution stored in the tray, toward the first heat transfer tube group 12a. The second supplier 13b supplies a second solution toward the second heat transfer tube group 12b. The second solution is obtained as a result of the first solution flowing down through the first heat transfer tube group 12a. The second supplier 13b includes, for example, a tray storing the second solution, and drips the second solution stored in the tray, toward the second heat transfer tube group 12b.

The evaporator unit 2 includes a first evaporator 20a and a second evaporator 20b. The second evaporator 20b generates a vapor-phase refrigerant at a pressure higher than the pressure in the first evaporator 20a. In the gravity direction, the first evaporator 20a is disposed in the upper stage, and the second evaporator 20b is disposed in the lower stage. The first evaporator 20a includes a third heat transfer tube group 22a and a third supplier 23a. The second evaporator 20b includes a fourth heat transfer tube group 22b and a fourth supplier 23b. Each of the third heat transfer tube group 22a and the fourth heat transfer tube group 22b includes a plurality of heat transfer tubes arranged in rows and columns, for example.

In the heat exchange unit 5a, the vapor-phase refrigerant generated by the first evaporator 20a is absorbed in the first absorber 10a. In other words, the first solution absorbs, inside the first container 11a, the vapor-phase refrigerant generated by the first evaporator 20a. The vapor-phase refrigerant generated by the second evaporator 20b is absorbed in the second absorber 10b. In other words, the second solution absorbs, inside the second container 11b, the vapor-phase refrigerant generated by the second evaporator 20b. In the heat exchange unit 5a, the second solution is discharged from the first absorber 10a to be guided to the second absorber 10b.

The absorber unit 1 includes a reservoir (first reservoir) 14. The reservoir 14 stores a third solution, inside the second container 11b. The third solution is generated as a result of the second solution absorbing the vapor-phase refrigerant, and has a solute concentration lower than the solute concentration of the second solution.

The absorber unit 1 includes a pump 15. The pump 15 pumps the third solution stored in the reservoir 14. The pump 15 is, for example, a dynamic canned pump.

The absorber unit 1 includes a first extraction path 17a. The first extraction path 17a is a path for extracting first gas that contains noncondensing gas. The noncondensing gas is hydrogen gas, for example. The first extraction path 17a has a first inlet 17j. The first inlet 17j is disposed between heat transfer tubes in the first heat transfer tube group 12a, for example. The first inlet 17j is positioned, in the first heat transfer tube group 12a, between the upper end of a heat transfer tube positioned at the highest in the gravity direction and the lower end of a heat transfer tube positioned at the lowest in the gravity direction, for example. The first inlet 17j may be positioned, in the first heat transfer tube group 12a, between the lower end of a heat transfer tube positioned at the highest in the gravity direction and the upper end of a heat transfer tube positioned at the lowest in the gravity direction, for example. The first inlet 17j is positioned, in the first heat transfer tube group 12a, between the outermost ends of heat transfer tubes positioned at both ends in the direction (Y-axis direction) perpendicular to the gravity direction and the longitudinal direction of the heat transfer tubes, for example. The first inlet 17j may be positioned, in the first heat transfer tube group 12a, between the innermost ends of heat transfer tubes positioned at both ends in the Y-axis direction. The first inlet 17j is disposed, inside the first container 11a, above the center of the first heat transfer tube group 12a in the gravity direction, for example. The first inlet 17j may be disposed at the center of the first heat transfer tube group 12a in the gravity direction or may be disposed below the center thereof, inside the first container 11a.

The absorber unit 1 includes a second extraction path 17b. The second extraction path 17b is connected to the first container 11a and the second container 11b, and guides second gas that contains noncondensing gas present inside the second container 11b, to the inside of the first container 11a. In other words, the second extraction path 17b allows the space filled with the vapor-phase refrigerant in the first absorber 10a and the space filled with the vapor-phase refrigerant in the second absorber 10b to communicate with each other. The second extraction path 17b has a second inlet 17k. The second inlet 17k is disposed between heat transfer tubes in the second heat transfer tube group 12b, for example. The second inlet 17k may be positioned, in the second heat transfer tube group 12b, between the lower end of a heat transfer tube positioned at the highest in the gravity direction and the upper end of a heat transfer tube positioned at the lowest in the gravity direction, for example. The second inlet 17k is positioned, in the second heat transfer tube group 12b, between the outermost ends of heat transfer tubes positioned at both ends in the Y-axis direction, for example. The second inlet 17k may be positioned, in the second heat transfer tube group 12b, between the innermost ends of heat transfer tubes positioned at both ends in the Y-axis direction. The second inlet 17k is disposed, inside the second container 11b, above the center of the second heat transfer tube group 12b in the gravity direction for example. The second inlet 17k may be disposed at the center of the second heat transfer tube group 12b in the gravity direction or may be disposed below the center thereof, inside the second container 11b.

The absorber unit 1 includes an ejector 16. The first extraction path 17a is connected to the first container 11a and the ejector 16, and guides the first gas to the ejector 16. The ejector 16 extracts the first gas from the first container 11a by using as a driving flow the third solution pumped by the pump 15.

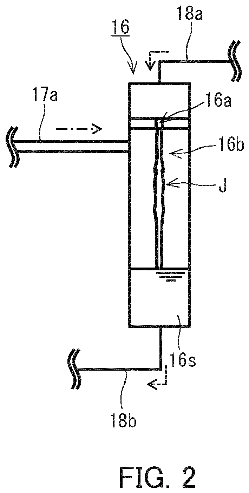

FIG. 2 is a schematic diagram of the ejector 16. In FIG. 2, the arrow of a broken line indicates the flow of the third solution, and the arrow of an alternate long and short dash line indicates the flow of the first gas. A supply path 18a and a return path 18b are connected to the ejector 16. The supply path 18a and the return path 18b are connected to the reservoir 14. As shown in FIG. 2, the third solution stored in the reservoir 14 is pumped by the pump 15 to be supplied to the ejector 16 through the supply path 18a. The ejector 16 includes, for example, an orifice 16a, a mixing part 16b, and a reservoir (second reservoir) 16s. The third solution supplied to the ejector 16 is injected through the orifice 16a into the mixing part 16b, thereby forming a jet J to be stored in the reservoir 16s. Accordingly, due to the dynamic pressure of the jet J and the disturbance at the liquid surface of the third solution stored in the reservoir 16s, a negative pressure is caused in the mixing part 16b. As a result, the first gas passes through the first extraction path 17a, whereby the noncondensing gas inside the first container 10a is suctioned. The third solution stored in the reservoir 16s is returned to the reservoir 16s through the return path 18b.

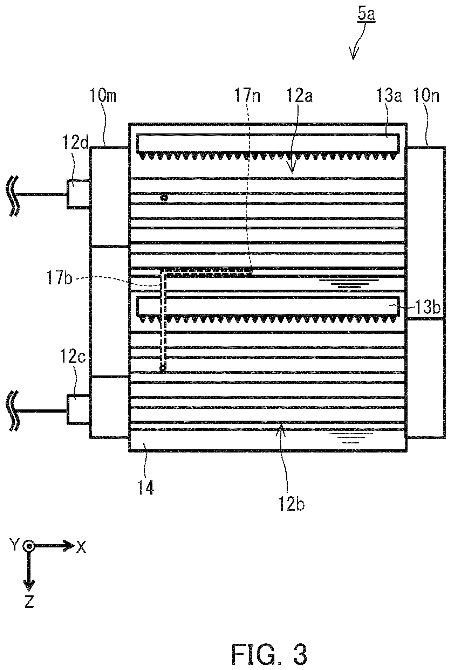

FIG. 3 shows an example of the heat exchange unit 5a in Embodiment 1. In this example, the heat exchange unit 5a has a cooling water inlet 12c and a cooling water outlet 12d. In addition, the heat exchange unit 5a includes a first cover 10m and a second cover 10n. The inside of the first cover 10m is divided into three spaces by two partitions. The inside of the second cover 10n is divided into two spaces by one partition. Cooling water is supplied from the cooling water inlet 12c to the lowermost space inside the first cover 10m, to be supplied to the inside of some heat transfer tubes in the second heat transfer tube group 12b. The cooling water flows in the X-axis positive direction inside said some heat transfer tubes, to be guided to the lower space inside the second cover 10n. In this space, the flow direction of the cooling water is inverted, and the cooling water flows in the X-axis negative direction inside different heat transfer tubes in the second heat transfer tube group 12b, to be guided to the center space inside the first cover 10m. In this space, the flow direction of the cooling water is inverted, and the cooling water flows in the X-axis positive direction inside some heat transfer tubes of the first heat transfer tube group 12a, to be guided to the upper space inside the second cover 10n. In this space, the flow direction of the cooling water is inverted, and the cooling water flows in the X-axis negative direction inside different heat transfer tubes of the first heat transfer tube group 12a, to be guided to the uppermost space inside the first cover 10m. Then, the cooling water is guided to the outside of the heat exchange unit 5a through the cooling water outlet 12d.

As shown in FIG. 3, in the heat exchange unit 5a, an outlet 17n of the second extraction path 17b is formed at the tip of the tube extending in the longitudinal direction (the X-axis direction) of the heat transfer tubes of the first heat transfer tube group 12a. With this configuration, the second extraction path 17b can discharge, inside the first container 11a, the second gas along a plane (XZ plane) parallel to the gravity direction and the longitudinal direction of the heat transfer tubes included in the first heat transfer tube group 12a. The second extraction path 17b may be configured to discharge the second gas along a plane other than the XZ plane.

The outlet 17n of the second extraction path 17b is positioned, inside the first container 11a, below the center of the first heat transfer tube group 12a in the gravity direction, for example. Therefore, the second gas is discharged below the center of the first heat transfer tube group 12a in the gravity direction. The outlet 17n is positioned, inside the first container 11a, below the lowermost portion of the first heat transfer tube group 12a, for example. The outlet 17n of the second extraction path 17b may be positioned at the center of the first heat transfer tube group 12a in the gravity direction or may be positioned above the center thereof, inside the first container 11a.

The heat exchange unit 5a is charged with a refrigerant and an absorbent liquid. The refrigerant is, for example, a fluorocarbon refrigerant such as hydrofluorocarbon (HFC), or a natural refrigerant such as water or ammonia. The absorbent liquid is, for example, an aqueous solution of lithium bromide, or an ionic fluid.

Each of the first evaporator 20a and the second evaporator 20b of the evaporator unit 2 is, for example, a shell-and-tube heat exchanger. For example, in the case where a refrigerant, such as water, whose saturated vapor pressure at ordinary temperature (20°C±15°C) is a negative pressure is used, the water-level head of a liquid-phase refrigerant tends to greatly influence the evaporation pressure in a flooded shell-and-tube heat exchanger. Therefore, in the case where a refrigerant such as water is used, it is advantageous that each of the first evaporator 20a and the second evaporator 20b is a spray type or sprinkle type shell-and-tube heat exchanger. As a method for sprinkling, a spray nozzle may be adopted.

Each of the first absorber 10a and the second absorber 10b in the absorber unit 1 is a shell-and-tube heat exchanger. As a method for supplying the absorbent liquid, a sprinkle type may be adopted, for example.

In each of the first heat transfer tube group 12a, the second heat transfer tube group 12b, the third heat transfer tube group 22a, and the fourth heat transfer tube group 22b, the heat transfer tubes are disposed, for example, in parallel to each other to define a plurality of rows in the gravity direction. In each of the first heat transfer tube group 12a, the second heat transfer tube group 12b, the third heat transfer tube group 22a, and the fourth heat transfer tube group 22b, the heat transfer tubes are disposed, for example, to form a square lattice, a rectangular lattice, or a parallelogram lattice in a plane (ZY plane) perpendicular to the longitudinal direction (X-axis direction) of the heat transfer tubes. Each heat transfer tube is a tube made of, for example, copper or stainless steel. Each heat transfer tube may have a groove in its inner surface or outer surface. The heat transfer tubes may be disposed so as to irregularly form a square lattice, a rectangular lattice, or a parallelogram lattice in a plane (ZY plane) perpendicular to the longitudinal direction (X-axis direction) of the heat transfer tubes.

The first evaporator 20a includes the third supplier 23a. The third supplier 23a supplies a liquid-phase refrigerant toward the third heat transfer tube group 22a. The third supplier 23a includes, for example, a tray storing the liquid-phase refrigerant, and the liquid-phase refrigerant stored in the tray is dripped toward the third heat transfer tube group 22a. The second evaporator 20b includes the fourth supplier 23b. The fourth supplier 23b supplies the liquid-phase refrigerant toward the fourth heat transfer tube group 22b. The fourth supplier 23b includes, for example, a tray storing the liquid-phase refrigerant, and the liquid-phase refrigerant stored in the tray is dripped toward the fourth heat transfer tube group 22b.

Each of the first container 11a and the second container 11b is, for example, a container having thermal insulation properties and pressure resistance. In each of the first container 11a and the second container 11b, the vapor-phase refrigerant inside the first container 11a and the second container 11b is isolated from the outside air such as air at atmospheric pressure.

Inside the first container 11a, the third heat transfer tube group 22a and the third supplier 23a are disposed. Inside the second container 11b, the fourth heat transfer tube group 22b and the fourth supplier 23b are disposed. In the second container 11b, the liquid-phase refrigerant is stored below the fourth heat transfer tube group 22b.

The first vapor flow path 31a is a flow path that guides the vapor-phase refrigerant generated by the first evaporator 20a, to the first absorber 10a. The second vapor flow path 31b is a flow path that guides the vapor-phase refrigerant generated by the second evaporator 20b, to the second absorber 10b. The member forming each of the first vapor flow path 31a and the second vapor flow path 31b is formed of a material that contains metal such as iron having thermal insulation properties and pressure resistance.

The heat exchange unit 5a includes, for example, a circulation path 24, a refrigerant pump 25, and a refrigerant supply path 29. The refrigerant supply path 29 is a path for supplying the liquid-phase refrigerant to the evaporator unit 2. The refrigerant supply path 29 is implemented by a pipe having thermal insulation properties and pressure resistance. The circulation path 24 is a path for allowing circulation of the liquid-phase refrigerant stored in the second evaporator 20b. The refrigerant pump 25 is disposed in the circulation path 24. The liquid-phase refrigerant stored in the second evaporator 20b is pumped due to operation of the refrigerant pump 25, and is guided to the third supplier 23a of the first evaporator 20a through the circulation path 24. The refrigerant pump 25 is, for example, a dynamic canned pump.

The heat exchange unit 5a includes, for example, a solution supply path 19. The solution supply path 19 is a path for supplying the first solution to the absorber unit 1. The first solution is guided to the first supplier 13a through the solution supply path 19. The solution supply path 19 is implemented by a pipe having thermal insulation properties and pressure resistance.

The heat exchange unit 5a includes a first eliminator 32a and a second eliminator 32b. The first eliminator 32a and the second eliminator 32b are each a gas-liquid separation mechanism that inhibits droplets of the liquid-phase refrigerant in the evaporator unit 2 from being dragged by the flow of the vapor-phase refrigerant and carried to the absorber unit 1. Each of the first eliminator 32a and the second eliminator 32b is fabricated by, for example, welding stainless steel plates having been pressed. The first eliminator 32a is disposed in, for example, the first vapor flow path 31a. The second eliminator 32b is disposed in, for example, the second vapor flow path 31b.

The heat exchange unit 5a includes, for example, a solution discharge path 18c. The solution discharge path 18c is a path for discharging the third solution from the absorber unit 1. The solution discharge path 18c is implemented by a pipe having thermal insulation properties and pressure resistance. One end of the solution discharge path 18c is connected to the supply path 18a. A part of the third solution pumped by the pump 15 is guided to the outside of the absorber unit 1 through the solution discharge path 18c.

### [1-2. Operations]

With respect to the heat exchange unit 5a configured as above, its operations and functions will be described below.

Operations of the heat exchange unit 5a will be described with reference to FIG. 1. When the heat exchange unit 5a is not operated for a predetermined period such as at night, the internal temperature of the heat exchange unit 5a is approximately equal to room temperature and uniform. In addition, the internal pressure of the heat exchange unit 5a is uniform as well. For example, at a room temperature of 26°C, the internal temperature of the heat exchange unit 5a is also approximately 26°C and uniform.

In use of the heat exchange unit 5a, a heat medium, such as water, that has absorbed heat from the outside of the heat exchange unit 5a flows through the heat transfer tubes of the third heat transfer tube group 22a and the fourth heat transfer tube group 22b. This heat medium flows into the fourth heat transfer tube group 22b at, for example, 12.5°C. The heat medium having passed through the fourth heat transfer tube group 22b is guided to the third heat transfer tube group 22a. Inside the heat transfer tubes of the first heat transfer tube group 12a and the second heat transfer tube group 12b, cooling water such as water that has dissipated heat to the outside of the heat exchange unit 5a flows. This cooling water flows into the second heat transfer tube group 12b at, for example, 32°C. The cooling water having passed through the second heat transfer tube group 12b is guided to the first heat transfer tube group 12a.

At the start of operation of the heat exchange unit 5a, a liquid-phase refrigerant is supplied to the first evaporator 20a through the refrigerant supply path 29. The temperature of the liquid-phase refrigerant to be supplied to the first evaporator 20a is about 26°C. The liquid-phase refrigerant supplied to the first evaporator 20a is dripped from the tray of the third supplier 23a toward the third heat transfer tube group 22a. The dripped liquid-phase refrigerant flows down the outer surfaces of the heat transfer tubes of the third heat transfer tube group 22a, to be stored inside the first evaporator 20a. The liquid-phase refrigerant stored in the first evaporator 20a is guided to the second evaporator 20b, and is dripped from the tray of the fourth supplier 23b toward the fourth heat transfer tube group 22b. The dripped liquid-phase refrigerant flows down the outer surfaces of the heat transfer tubes of the fourth heat transfer tube group 22b, to be stored inside the second evaporator 20b. The liquid-phase refrigerant stored inside the second evaporator 20b is guided due to the operation of the refrigerant pump 25 to the inside of the first evaporator 20a through the circulation path 24. When the heat exchange unit 5a is operated at the rated load, the flow rate of the liquid-phase refrigerant being circulated by the refrigerant pump 25 is, for example, about 30 L/min. The flow rate of the liquid-phase refrigerant dripped from the tray of the third supplier 23a is also the same as the flow rate of the liquid-phase refrigerant being circulated by the refrigerant pump 25.

Next, the first solution is supplied to the first absorber 10a through the solution supply path 19. The temperature of the first solution to be supplied to the first absorber 10a is 50°C, the solute concentration of the first solution is about 63 weight%, and the flow rate of the first solution is about 16 L/min. The first solution supplied to the first absorber 10a is dripped from the tray of the first supplier 13a toward the first heat transfer tube group 12a. The dripped first solution flows down the outer surfaces of the heat transfer tubes of the first heat transfer tube group 12a, and the second solution is stored in the lower portion of the first absorber 10a. The second solution stored in the lower portion of the first absorber 10a is guided to the second absorber 10b, and is dripped from the tray of the second supplier 13b toward the second heat transfer tube group 12b. The temperature of the second solution dripped from the tray of the second supplier 13b is 35°C, the solute concentration of the second solution is about 63 weight%, and the flow rate of the second solution is about 16 L/min. The dripped second solution flows down the outer surfaces of the heat transfer tubes of the second heat transfer tube group 12b, thereby turning into the third solution, and the third solution is stored in the lower portion of the second absorber 10b, thereby forming the reservoir 14. The third solution stored in the reservoir 14 is discharged to the outside of the heat exchange unit 5a through the solution discharge path 18c due to operation of the pump 15. The temperature of the third solution to be discharged from the second absorber 10b is 33°C.

The first solution absorbs the vapor-phase refrigerant present inside the first evaporator 20a, while flowing down the outer surfaces of the heat transfer tubes of the first heat transfer tube group 12a. In addition, the second solution absorbs the vapor-phase refrigerant present inside the second evaporator 20b, while flowing down the outer surfaces of the heat transfer tubes of the second heat transfer tube group 12b. Since the first solution and the second solution absorb the vapor-phase refrigerants, the temperatures of those solutions increase. Simultaneously, those solutions are cooled by the cooling water flowing through the heat transfer tubes of the first heat transfer tube group 12a and the second heat transfer tube group 12b, whereby super cooling absorption continuously occurs. Thus, the internal pressures of the absorber unit 1 and the evaporator unit 2 decrease. In association with the decrease in the internal pressures of the absorber unit 1 and the evaporator unit 2, the liquid-phase refrigerant flowing down the outer surfaces of the heat transfer tubes of the third heat transfer tube group 22a and the fourth heat transfer tube group 22b evaporates. The evaporation of the liquid-phase refrigerant decreases the temperature of the liquid-phase refrigerant. Simultaneously, the liquid-phase refrigerant is heated by the heat medium flowing through the heat transfer tubes of the third heat transfer tube group 22a and the fourth heat transfer tube group 22b. Thus, evaporation of the liquid-phase refrigerant continuously occurs. This keeps the internal pressures of the absorber unit 1 and the evaporator unit 2 at predetermined pressures, whereby a steady state is established. For example, in the steady state, the temperature of the liquid-phase refrigerant in the first evaporator 20a is about 7°C, and the temperature of the liquid-phase refrigerant in the second evaporator 20b is about 9.75°C. For example, in the steady state, the temperature of the first solution to be supplied to the first absorber 10a is 50°C, the solute concentration of the first solution is about 63 weight%, and the flow rate of the first solution is about 17 L/min. For example, in the steady state, the temperature of the second solution to be supplied to the second absorber 10b is 45°C, the solute concentration of the second solution is about 60 weight%, and the flow rate of the second solution is about 16 L/min. For example, in the steady state, the temperature of the third solution to be discharged from the second absorber 10b is 36°C, the solute concentration of the third solution is about 57 weight%, and the flow rate of the third solution is about 16 L/min. For example, in the steady state, the pressure in the first absorber 10a is about 1.0 kPa, and the pressure in the second absorber 10b is about 13 kPa.

Next, operations of the ejector 16, the first extraction path 17a, and the second extraction path 17b will be described with reference to FIG. 2.

As shown in FIG. 2, the third solution stored in the reservoir 14 is supplied to the ejector 16 through the supply path 18a due to operation of the pump 15. The third solution supplied to the ejector 16 is injected through the orifice 16a as the jet J into the mixing part 16b, to be stored in the reservoir 16s. Accordingly, due to the dynamic pressure of the jet J and the disturbance at the surface of the liquid stored in the reservoir 16s, a negative pressure is caused in the mixing part 16b. As a result, the first gas that contains noncondensing gas present inside the first container 11a is suctioned through the first extraction path 17a. The pressure in the mixing part 16b is about 0.995 kPa, and is lower by about 0.005 kPa than the pressure of 1.0 kPa in the first absorber 10a.

The second extraction path 17b is connected to the first container 11a and the second container 11b so as to allow the inside of the first absorber 10a to communicate with the inside of the second absorber 10b. Therefore, the second gas that contains noncondensing gas present inside the second container 11b passes through the second extraction path 17b, at a flow velocity due to the differential pressure between the pressure of 13 kPa in the second absorber 10b and the pressure of 1.0 kPa in the first absorber 10a. Accordingly, the second gas is sent from the second absorber 10b to the first absorber 10a. The flow velocity of the second gas in the second extraction path 17b can be a fast flow of about 200 m/sec. The second extraction path 17b is implemented by, for example, a tube having an inner diameter of about 3 mm. In addition, the density of the vapor-phase refrigerant in the second absorber 10b is 0.00851 kg/m³, which is very small. Therefore, the mass flow rate of the vapor-phase refrigerant in the second extraction path 17b is about 1.32×10⁻⁵ kg/sec, the flow of the vapor-phase refrigerant in the second extraction path 17b is 31 W or less on a refrigeration capacity basis, and pressure equalization of about 0.05 Pa is caused. These are at levels that can be ignored with respect to the refrigeration capacity of the absorption-type refrigerator including the heat exchange unit 5a and the differential pressure between the pressure in the second absorber 10b and the pressure in the first absorber 10a.

### [1-3. Effects, etc.]

As described above, in the present embodiment, the absorber unit 1 includes the first container 11a, the first heat transfer tube group 12a, the first supplier 13a, the second container 11b, the second heat transfer tube group 12b, the second supplier 13b, the reservoir 14, and the pump 15. The first heat transfer tube group 12a is disposed inside the first container 11a and has a flow path for cooling water thereinside. The first supplier 13a supplies the first solution toward the first heat transfer tube group 12a. The second heat transfer tube group 12b is disposed inside the second container 11b, and has a flow path for the cooling water thereinside. The second supplier 13b supplies the second solution toward the second heat transfer tube group 12b. The reservoir 14 stores the third solution, inside the second container 11b. The third solution is generated as a result of the second solution absorbing the vapor-phase refrigerant, and has a solute concentration lower than the solute concentration of the second solution. The pump 15 pumps the third solution stored in the reservoir 14. The absorber unit 1 further includes the ejector 16, the first extraction path 17a, and the second extraction path 17b. The ejector 16 extracts the first gas that contains noncondensing gas from the first container 11a, by using as a driving flow the third solution pumped by the pump 15. The first extraction path 17a is connected to the first container 11a and the ejector 16, and guides the first gas to the ejector 16. The second extraction path 17b is connected to the first container 11a and the second container 11b, and guides the second gas that contains noncondensing gas present inside the second container 11b, to the inside of the first container 11a.

Thus, the second gas that contains noncondensing gas present inside the second container 11b is guided to the inside of the first container 11a through the second extraction path 17b, and the first gas that contains noncondensing gas is guided from the first container 11a to the ejector 16 through the first extraction path 17a. The pressure in the mixing part 16b of the ejector 16 can be inhibited from becoming an intermediate pressure between the pressure in the second absorber 10b and the pressure in the first absorber 10a, and the pressure in the mixing part 16b can be made lower than the pressure in the first absorber 10a. For example, when the pressure in the first absorber 10a is 1.0 kPa, the pressure in the mixing part 16b is about 0.995 kPa. Therefore, in the absorber unit 1, the gas that contains noncondensing gas present inside the first container 11a and the second container 11b can be efficiently extracted.

As in the present embodiment, the second extraction path 17b may allow, inside the first container 11a, the second gas to be discharged along a plane parallel to the gravity direction and the longitudinal direction of the heat transfer tubes included in the first heat transfer tube group 12a. Accordingly, the first solution flowing down the outer surfaces of the heat transfer tubes of the first heat transfer tube group 12a is unlikely to be blown away by the second gas discharged from the second extraction path 17b. Therefore, the first solution easily flows down the outer surfaces of the heat transfer tube of the first heat transfer tube group 12a.

As in the present embodiment, the second extraction path 17b may allow, inside the first container 11a, the second gas to be discharged below the center of the first heat transfer tube group 12a in the gravity direction. Accordingly, discharge of the second gas from the second extraction path 17b is unlikely to disturb the flow of the vapor-phase refrigerant, and influence on the performance of the first absorber 10a tends to be small.

As in the present embodiment, the first extraction path 17a may have, inside the first container 11a, the first inlet 17j disposed above the center of the first heat transfer tube group 12a in the gravity direction. Accordingly, the noncondensing gas is easily guided to the first extraction path 17a. This is because, above the center of the first heat transfer tube group 12a in the gravity direction, the amount of the vapor-phase refrigerant absorbed by the first solution is large, and a flow of gas is easily generated toward above the center of the first heat transfer tube group 12a in the gravity direction.

As in the present embodiment, the second extraction path 17b may have, inside the second container 11b, the second inlet 17k disposed above the center of the second heat transfer tube group 12b in the gravity direction. Accordingly, the noncondensing gas is easily guided to the second extraction path 17b. This is because, above the center of the second heat transfer tube group 12b in the gravity direction, the amount of the vapor-phase refrigerant absorbed by the second solution is large, and a flow of gas is easily generated toward above the center of the second heat transfer tube group 12b in the gravity direction.

As in the present embodiment, the heat exchange unit 5a may include the absorber unit 1, the first evaporator 20a, and the second evaporator 20b. The second evaporator 20b generates a vapor-phase refrigerant at a pressure higher than the pressure in the first evaporator 20a. In the heat exchange unit 5a, the first solution absorbs, inside the first container 11a, the vapor-phase refrigerant generated by the first evaporator 20a. In addition, the second solution absorbs the vapor-phase refrigerant generated by the second evaporator 20b.

### (Embodiment 2)

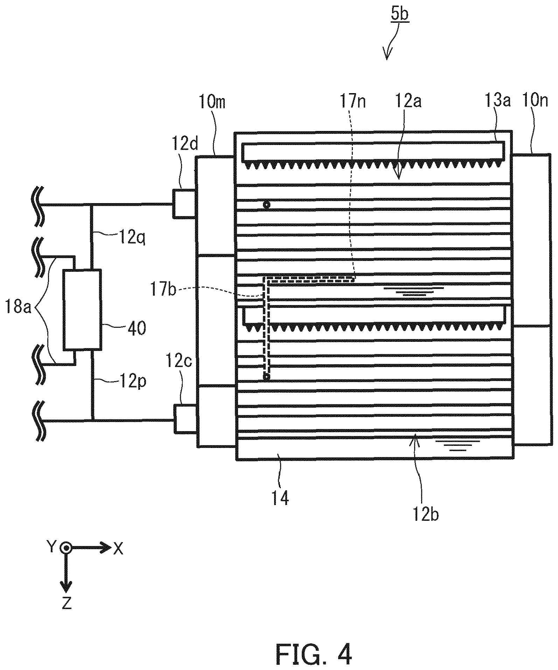

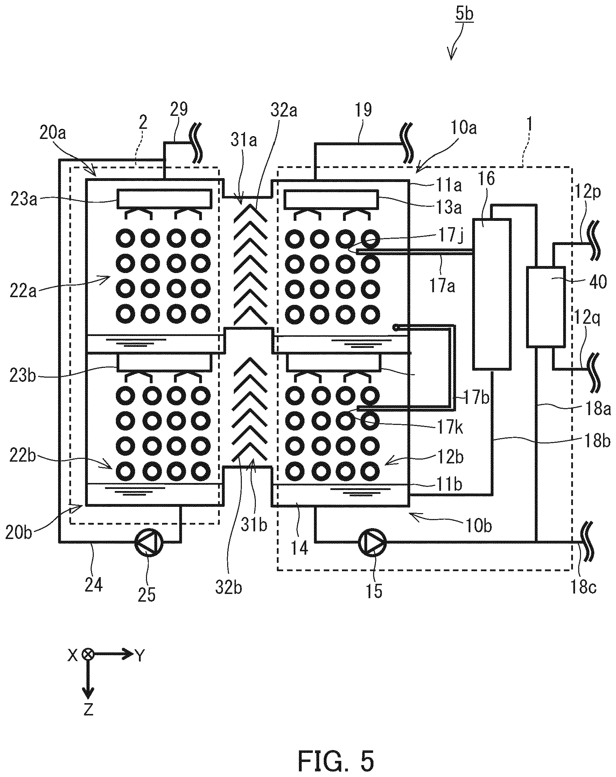

Embodiment 2 will be described below with reference to FIG. 4 and FIG. 5.

### [2-1. Configuration]

FIG. 4 and FIG. 5 are each a schematic diagram of a heat exchange unit 5b in Embodiment 2. The heat exchange unit 5b has a similar configuration to that of the heat exchange unit 5a except portions as otherwise particularly described. The constituent elements of the heat exchange unit 5b that are identical or corresponding to those of the heat exchange unit 5a are denoted by the same reference signs, and detailed descriptions thereof will be omitted. The description of the heat exchange unit 5a also applies to the heat exchange unit 5b unless the descriptions are technically contradictory.

As shown in FIG. 4 and FIG. 5, the heat exchange unit 5b includes a heat exchanger 40. The heat exchanger 40 allows heat exchange between the cooling water flowing toward at least one of the first heat transfer tube group 12a and the second heat transfer tube group 12b and the third solution flowing toward the ejector 16.

The heat exchange unit 5b includes, for example, an upstream path 12p and a downstream path 12q. The upstream path 12p is branched from the flow path connected to the cooling water inlet 12c and is connected to the heat exchanger 40. Thus, the cooling water flowing toward at least one of the first heat transfer tube group 12a and the second heat transfer tube group 12b is guided to the heat exchanger 40. The downstream path 12q is connected to the heat exchanger 40 and a cooling water flow path extending from the cooling water outlet 12d to the outside of the heat exchange unit 5b. Accordingly, the cooling water having passed through the heat exchanger 40 is guided to the outside of the heat exchange unit 5b together with the cooling water having passed through the cooling water outlet 12d.

The heat exchanger 40 is not limited to a specific heat exchanger as long as it is able to allow heat exchange between the cooling water and the third solution. The heat exchanger 40 may be, for example, a brazed-plate-type heat exchanger made of stainless steel, or may be a double-tube-type heat exchanger.

### [2-2. Operations]

With respect to the heat exchange unit 5b configured as above, its operations and functions will be described below. When the heat exchange unit 5b is operated in a partial load range under a low outdoor temperature, the temperature of the cooling water flowing into the heat transfer tubes of the first heat transfer tube group 12a and the second heat transfer tube group 12b becomes low. In addition, the solute concentration of the first solution to be supplied to the first absorber 10a becomes low, and the flow rate of the first solution also decreases. For example, when the heat exchange unit 5b is operated under about a 25% load, the cooling water such as water that has dissipated heat to the outside air is flowing through the heat transfer tubes of the first heat transfer tube group 12a and the second heat transfer tube group 12b, and this cooling water flows into the second heat transfer tube group 12b at, for example, 18°C. In addition, the temperature of the first solution to be supplied to the first absorber 10a is 27°C, the solute concentration of the first solution is about 48.3 weight%, and the flow rate of the first solution is about 4 L/min. The first solution supplied to the first absorber 10a is dripped from the tray of the first supplier 13a toward the first heat transfer tube group 12a. The dripped first solution flows down the outer surfaces of the heat transfer tubes of the first heat transfer tube group 12a, and the second solution is stored in the lower portion of the first absorber 10a. The second solution stored in the lower portion of the first absorber 10a is guided to the second absorber 10b, and is dripped from the tray of the second supplier 13b toward the second heat transfer tube group 12b. The temperature of the second solution dripped from the tray of the second supplier 13b is 21°C, the solute concentration of the second solution is 48.3 mass%, and the flow rate of the second solution is about 4 L/min. The dripped second solution flows down the outer surfaces of the heat transfer tubes of the second heat transfer tube group 12b, and the third solution is stored in the reservoir 14. The third solution stored in the reservoir 14 is discharged to the outside of the heat exchange unit 5b through the solution discharge path 18c, due to operation of the pump 15. The temperature of the third solution to be discharged from the second absorber 10b is 19°C.

The first solution absorbs the vapor-phase refrigerant present inside the first evaporator 20a, while flowing down the outer surfaces of the heat transfer tubes of the first heat transfer tube group 12a. In addition, the second solution absorbs the vapor-phase refrigerant present inside the second evaporator 20b, while flowing down the outer surfaces of the heat transfer tubes of the second heat transfer tube group 12b. Since the first solution and the second solution absorb the vapor-phase refrigerants, the temperatures of those solutions increase. Simultaneously, those solutions are cooled by the cooling water flowing through the heat transfer tubes of the first heat transfer tube group 12a and the second heat transfer tube group 12b, whereby super cooling absorption continuously occurs. Thus, the internal pressures of the absorber unit 1 and the evaporator unit 2 decrease. In association with the decrease in the internal pressures of the absorber unit 1 and the evaporator unit 2, the liquid-phase refrigerant flowing down the outer surfaces of the heat transfer tubes of the third heat transfer tube group 22a and the fourth heat transfer tube group 22b evaporates. The evaporation of the liquid-phase refrigerant decreases the temperature of the liquid-phase refrigerant. Simultaneously, the liquid-phase refrigerant is heated by the heat medium flowing through the heat transfer tubes of the third heat transfer tube group 22a and the fourth heat transfer tube group 22b. Thus, evaporation of the liquid-phase refrigerant continuously occurs. This keeps the internal pressures of the absorber unit 1 and the evaporator unit 2 at predetermined pressures, whereby a steady state is established. For example, in the steady state, the temperature of the liquid-phase refrigerant in the first evaporator 20a is about 7°C, and the temperature of the liquid-phase refrigerant in the second evaporator 20b is about 8.4°C. For example, in the steady state, the temperature of the first solution to be supplied to the first absorber 10a is 27°C, the solute concentration of the first solution is about 48.3 weight%, and the flow rate of the first solution is about 4 L/min. For example, in the steady state, the temperature of the second solution to be supplied to the second absorber 10b is 22.5°C, the solute concentration of the second solution is about 45.4 weight%, and the flow rate of the second solution is about 4 L/min. For example, in the steady state, the temperature of the third solution to be discharged from the second absorber 10b is 19.9°C, the solute concentration of the third solution is about 43 weight%, and the flow rate of the third solution is about 4 L/min. For example, in the steady state, the pressure in the first absorber 10a is about 1.0 kPa, and the pressure in the second absorber 10b is about 1.05 kPa.

Next, operations of the ejector 16, the first extraction path 17a, and the second extraction path 17b will be described with reference to FIG. 2.

When the heat exchange unit 5b is operated under a partial load of about a 25% load, the flow rate of the third solution to be supplied to the ejector 16 decreases. For example, when the heat exchange unit 5b is operated under about a 25% load, the flow rate of the third solution also becomes about 25% of the flow rate of the third solution under the rated condition. The velocity of the jet J under such a condition becomes 25% of the velocity of the jet J under the rated condition. Therefore, in the mixing part 16b of the ejector 16 under such a condition, the negative pressure caused by the dynamic pressure of the jet J of the third solution and the disturbance at the liquid surface of the third solution in the reservoir 16s decreases to about 0.3 Pa. Under the rated condition where the load is 100% and the flow rate of the third solution is 100%, the negative pressure generated in the mixing part 16b is about 5 Pa. The negative pressure of about 0.3 Pa is about 6.3% of the negative pressure of about 5 Pa. Meanwhile, the temperature of the third solution to be supplied to the ejector 16 is cooled to about 18°C, whereby the saturated pressure of the third solution decreases to 0.93 kPa. Thus, the difference between the pressure of 0.9297 kPa (=0.93 kPa-0.0003 kPa) of the mixing part 16b of the ejector 16 and the internal pressure of 1.0 kPa of the first absorber 10a is 70.3 Pa. As a result, the first gas that contains noncondensing gas is extracted through the first extraction path 17a from the inside of the first absorber 10a.

### [2-3. Effects, etc.]

As described above, in the present embodiment, the absorber unit 1b further includes the heat exchanger 40. The heat exchanger 40 allows heat exchange between the cooling water flowing toward at least one of the first heat transfer tube group 12a and the second heat transfer tube group 12b and the third solution flowing toward the ejector 16. Accordingly, the third solution is cooled in the heat exchanger 40, to be supplied to the ejector 16, whereby the pressure in the ejector 16 easily becomes low. Therefore, even under a condition where the negative pressure caused in the ejector 16 is small, as under a partial load condition, the first gas that contains noncondensing gas can be extracted from the first absorber 10a.

### (Embodiment 3)

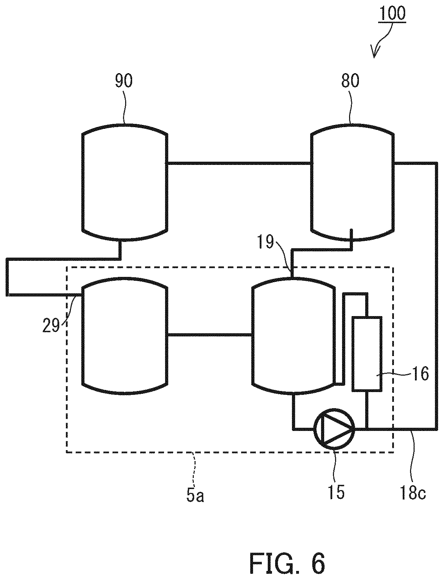

Embodiment 3 will be described below with reference to FIG. 6.

### [3-1. Configuration]

As shown in FIG. 6, an absorption-type refrigerator 100 includes, for example, the heat exchange unit 5a. The absorption-type refrigerator 100 further includes, for example, a regenerator 80 and a condenser 90. The absorption-type refrigerator 100 is, for example, an absorption-type refrigerator of a single-effect cycle. The absorption-type refrigerator 100 may be an absorption-type refrigerator of a double-effect cycle or a triple-effect cycle. If a gas burner is used as the heat source for the regenerator 80, the absorption-type refrigerator 100 can be a gas chiller.

### [3-2. Operations]

With respect to the absorption-type refrigerator 100 configured as above, its operations and functions will be described below. The third solution stored in the absorber unit 1a is guided to the regenerator 80 through the solution discharge path 18c. In the regenerator 80, the solute concentration of the solution is increased by heating. With the solute concentration increased, the first solution is prepared, and the first solution is guided to the absorber unit 1 through the solution supply path 19. Meanwhile, the heating of the solution in the regenerator 80 generates a vapor-phase refrigerant. This vapor-phase refrigerant is guided to the condenser 90, and is cooled to be condensed in the condenser 90, whereby a liquid-phase refrigerant is generated. For example, the liquid-phase refrigerant is reduced in pressure, and then is guided to the evaporator unit 2 through the refrigerant supply path 29.

### [3-3. Effects]

As described above, in the present embodiment, the absorption-type refrigerator 100 includes the heat exchange unit 5a. Thus, gas that contains noncondensing gas present inside the first container 11a and the second container 11b can be efficiently extracted. Therefore, the refrigeration capacity of the absorption-type refrigerator 100 is unlikely to decrease.

Embodiments 1, 2, and 3 have been described as examples of the technique disclosed in the present application. However, the technique of the present disclosure is not limited thereto, and can also be applied to embodiments obtained by modification, replacement, addition, omission, or the like.

### INDUSTRIAL APPLICABILITY

The present disclosure is applicable to absorption-type refrigerators that are adapted to central air conditioners for buildings, chillers for process cooling, and the like.

## Claims

1. An absorber unit comprising:
a first container;
a first heat transfer tube group disposed inside the first container and having a flow path for cooling water thereinside;
a first supplier configured to supply a first solution toward the first heat transfer tube group;
a second container;
a second heat transfer tube group disposed inside the second container and having a flow path for the cooling water thereinside;
a second supplier configured to supply a second solution toward the second heat transfer tube group;
a reservoir configured to store, inside the second container, a third solution that is generated as a result of the second solution absorbing a vapor-phase refrigerant and that has a solute concentration lower than a solute concentration of the second solution;
a pump configured to pump the third solution stored in the reservoir;
an ejector configured to extract first gas that contains noncondensing gas from the first container, by using as a driving flow the third solution pumped by the pump;
a first extraction path connected to the first container and the ejector and configured to guide the first gas to the ejector; and
a second extraction path connected to the first container and the second container and configured to guide second gas that contains noncondensing gas present inside the second container, to an inside of the first container.

2. The absorber unit according to claim 1, wherein
the second extraction path allows, inside the first container, the second gas to be discharged along a plane parallel to a gravity direction and a longitudinal direction of a heat transfer tube included in the first heat transfer tube group.

3. The absorber unit according to claim 1, wherein
the second extraction path allows, inside the first container, the second gas to be discharged below a center of the first heat transfer tube group in a gravity direction.

4. The absorber unit according to claim 1, wherein
the first extraction path has, inside the first container, a first inlet disposed above a center of the first heat transfer tube group in a gravity direction.

5. The absorber unit according to claim 1, wherein
the second extraction path has, inside the second container, a second inlet disposed above a center of the second heat transfer tube group in a gravity direction.

6. The absorber unit according to claim 1, further comprising
a heat exchanger configured to allow heat exchange between the cooling water flowing toward at least one of the first heat transfer tube group and the second heat transfer tube group and the third solution flowing toward the ejector.

7. A heat exchange unit comprising:
the absorber unit according to any one of claims 1 to 6;
a first evaporator; and
a second evaporator configured to generate a vapor-phase refrigerant at a pressure higher than a pressure in the first evaporator, wherein
the first solution absorbs, inside the first container, a vapor-phase refrigerant generated by the first evaporator, and
the second solution absorbs, inside the second container, the vapor-phase refrigerant generated by the second evaporator.

8. An absorption-type refrigerator comprising the heat exchange unit according to claim 7.
